# FASCICULE DE BREVET EUROPEEN

(11) **EP 0 442 229 B1**
(45) Date de publication et mention de la délivrance du brevet: **03.03.1993**
(21) Numéro de dépôt: 90403519.3
(22) Date de dépôt: 11.12.1990
(51) Int. Cl.: B60J 10/00

(54) **Joint d'étanchéité tubulaire, pour périphérie d'ouverture d'un véhicule**
Schlauchdichtung für den Rand einer Fahrzeugöffnung
Tubular sealing strip for the periphery of a vehicle opening

(30) Priorité: 16.02.1990 FR 9001921
(43) Date de publication de la demande: 21.08.1991
(73) Titulaire: HUTCHINSON S.A. une Société Anonyme dotée d'un Conseil de Surveillance et d'un Directoire, F-75008 Paris (FR)
(72) Inventeur: Guillon, Henri, F-45700 Le Bois St Maurice S/Fessart (FR)
(74) Mandataire: Orès, Bernard

(56) Documents cités:
- DE-A- 2 359 972
- DE-A- 3 532 961
- FR-A- 1 181 009
- FR-A- 2 248 395
- FR-A- 2 604 957
- FR-A- 2 611 621
- FR-A- 2 614 849
- US-A- 4 769 950

## Description

L'invention a pour objet un joint d'étanchéité tubulaire, en particulier pour la périphérie d'une ouverture comme celle d'une porte, d'un toit ouvrant ou d'un coffre d'une automobile.

On sait que pour réaliser l'étanchéité de la périphérie de certaines ouvertures, notamment dans le domaine automobile, on fait application de joints tubulaires, c'est-à-dire de profilés en matériau du type élastomère, plastomère ou autre dont la partie active est un tube en matériau relativement souple à laquelle est généralement associée une partie de montage sur le pourtour de l'ouverture, par exemple la caisse d'un véhicule automobile ou sur un élément de fermeture de cette ouverture, par exemple une portière, la partie mobile d'un toit ouvrant, un capot de coffre ou de compartiment moteur. Des joints d'étanchéité de ce type sont décrits, par exemple, dans FR-A-2 611 621, US-A-4 769 950, FR-A-2 614 849 ou FR-A-2 604 957.

Dans certaines réalisations pour lesquelles le joint d'étanchéité est disposé sur l'élément obturant l'ouverture, par exemple une portière d'automobile, ledit joint est monté par accrochage d'une partie d'ancrage en un matériau relativement rigide dans un profilé métallique ou rail dont la section droite est quelque peu semblable à celle de la partie femelle d'une glissière en queue d'aronde. Le montage a généralement lieu en présentant le profil d'étanchéité en regard du rail dans la cavité duquel est logée la partie d'ancrage en tirant parti de la déformation élastique d'au moins une, et de préférence de deux lèvres associée(s) à ladite partie d'ancrage. Lorsque le joint d'étanchéité doit être conformé suivant des zones à très petit rayon de courbure, les déformations imposées à la partie d'ancrage relativement rigide amènent parfois à des cassures de la partie tubulaire et, par conséquent, à une perte des qualités d'étanchéité ou bien à la formation de cloques ou boursoufflures également défavorables tant en ce qui concerne la fonction d'étanchéité à remplir par le joint que son aspect esthétique.

C'est, par conséquent, un but général de l'invention de fournir un joint d'étanchéité qui pallie les inconvénients rapportés des dispositifs connus.

C'est, aussi, un but de l'invention de fournir un tel joint dont le mode de fabrication soit comparable à celui des dispositifs connus.

Ces buts sont atteints, dans un dispositif selon l'invention, par le fait que le joint destiné à être monté par accrochage de sa partie d'ancrage dans un rail comporte, dans ladite partie d'ancrage, une zone en un matériau plastomère ou élastomère de faible rigidité, et ainsi déformable, entre deux parements en un matériau élastomère ou plastomère à plus grande rigidité, cependant déformable pour permettre la mise en place de la partie d'ancrage dans le rail mais suffisamment rigide pour rester en place après montage.

Dans une forme de réalisation préférée, la zone à plus grande déformabilité de la partie d'ancrage est en le même matériau que celui constitutif de la partie active du joint tubulaire, par exemple en un matériau élastomère ou plastomère de type cellulaire.

L'invention sera bien comprise par la description qui suit, faite à titre d'exemple et en référence au dessin annexé dans lequel :
- la figure 1 est une section droite d'un joint selon l'invention ;
- la figure 2 est une vue partielle analogue à celle de la figure 1 illustrant le positionnement du joint dans le rail qu'il équipe.

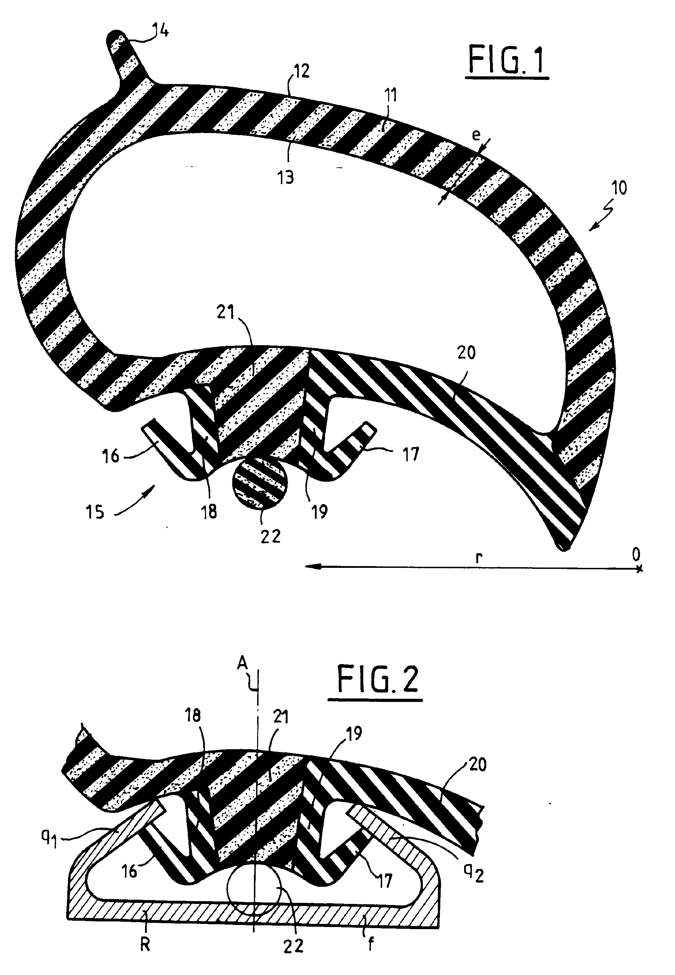

Un joint selon l'invention, 10, comporte une partie active II consituée par un boudin tubulaire à section droite quelque peu ovale limitée par une surface externe 12 et une surface interne 13 sensiblement parallèles entre elles et à distance e l'une de l'autre sur la majeure partie de la section droite laquelle présente en une zone de sa partie opératoire une courte lèvre 14, d'épaisseur inférieure à e et, en une autre zone, une partie d'ancrage 15. Comme bien visible sur les figures 1 et 2 ladite partie d'ancrage 15, relativement rigide, présente deux lèvres 16 et 17 dont la première se raccorde à une âme 18 totalement extérieure à la surface externe 12 de la partie 11 et dont l'autre se raccorde à une âme 19 qui est monobloc avec une partie 20 formant une partie du contour de la partie tubulaire du joint. Les lèvres 16 et 17 sont prévues pour permettre la mise en place et le maintien du joint 10 dans un rail R, par exemple métallique, dont la section droite montrée sur la figure 2 est quelque peu semblable à la partie femelle d'une glissière en queue d'aronde, c'est-à-dire à fond plan f et ailes q₁ et q₂ inclinées et convergentes vers un plan médian de symétrie A du rail.

Conformément à un mode de réalisation de l'invention, les âmes 18 et 19 constituent les parements d'une zone 21, médiane, en le même matériau que celui constitutif de la partie tubulaire II et qui est un matériau élastomère ou plastomère à faible rigidité, avantageusement à structure cellulaire.

Comme montré également sur les figures 1 et 2 à la zone 21 est associé à l'extérieur du joint un jonc ou cordon 22, en le même matériau souple que celui constitutif de ladite zone 21 et qui, lorsque le joint est en place dans le rail R, contribue à l'étanchéité d'ensemble du dispositif (on rappelle ici en ce qui concerne la figure 2 que la représentation donnée est celle habituelle dans l'industrie des élastomères où les pièces sont dessinées dans leur condition non sollicitée).

Un joint selon l'invention est avantageusement fabriqué par co-extrusion de ses matériaux constitutifs, par exemple du type cellulaire, souple, pour la majeure partie du boudin tubulaire 11, la zone 21 et le cordon 22, les parements 18, 19 et les lèvres 16, 17 qui leurs sont associées, de même que la partie 20 étant réalisés en un matériau élastomère plus rigide, par exemple, d'une dureté de 70 ShoreA.

Une structure de joint telle que décrite ci-dessus permet de déplacer, vers le centre O qui est celui du rayon r à prendre, la fibre neutre de la poutre tubulaire formant la partie active du joint avec pour résultat la possibilité pour cette partie active 11 du joint de prendre les rayons de courbure voulus sans déformation importante, l'allongement nécessaire pour éviter les cassures ou boursoufflures étant fourni par un effet de friction entre les parements 18 et 19 et la zone médiane 21.

## Revendications

1. Joint d'étanchéité tubulaire destiné à être monté par accrochage d'une-partie d'ancrage dans un rail, caractérisé en ce que ladite partie d'ancrage (15) comporte une zone (21) en un matériau plastomère ou élastomère de faible rigidité, et ainsi déformable, entre deux parements (18, 19) en matériau élastomère ou plastomère à plus grande rigidité, cependant déformable pour permettre la mise en place de la partie d'ancrage (15) dans le rail (R) mais suffisamment rigide pour rester en place après montage.

2. Joint d'étanchéité selon la revendication 1, caractérisé en ce que la zone (21) à plus grande déformabilité de sa partie d'ancrage (15) est en le même matériau que celui constitutif de sa partie active (11), par exemple en un matériau élastomère ou plastomère de type cellulaire.

## Patentansprüche

1. Durch Eingreifen unter Verhaken eines Verankerungsteils in eine Schiene montierbare Schlauchdichtung, dadurch gekennzeichnet, daß dieser Verankerungsteil (15) eine Zone (21) aus einem Plastomer- oder Elastomermaterial geringer Steifigkeit, und somit verformbar, zwischen zwei Stirnausbildungen (18, 19) aus einem Elastomer- oder Plastomermaterial größerer Steifigkeit umfasst, das jedoch verformbar ist, um das Einsetzen des Verankerungsteils (15) in der Schiene (R) zu ermöglichen, doch ausreichend steif ist, um nach der Montage an Ort und Stelle zu verbleiben.

2. Dichtung nach Anspruch 1, dadurch gekennzeichnet, daß die Zone (21) mit größerer Verformbarkeit ihres Verankerungsteils (15) aus dem gleichen Material wie dem ihren aktiven Teil (11) bildenden besteht, beispielsweise aus Elastomer- oder Plastomermaterial vom zellförmigen Typ.

## Claims

1. Tubular sealing strip intended to be mounted by fastening of an anchoring portion in a rail, characterized in that said anchoring portion (**15**) comprises a zone (**21**) of a plastomer or elastomer of low rigidity, which is thus deformable, between two facings (**18, 19**) of an elastomer or plastomer with higher rigidity, which is nevertheless deformable to permit the insertion of the anchoring portion (**15**) in the rail (**R**), but sufficiently rigid to remain in place after mounting.

2. Sealing strip as claimed in Claim 1, characterized in that the zone (**21**) of greater deformability of its anchoring portion (**15**) is made of the same material as the one making up its active portion (**11**), for example of an elastomer or plastomer of the cellular type.
